# EUROPEAN PATENT SPECIFICATION

(11) **EP 4 574 426 B1**
(45) Date of publication and mention of the grant of the patent: **08.07.2026**
(21) Application number: 23218921.7
(22) Date of filing: 20.12.2023
(51) Int. Cl.: B33Y 10/00, B33Y 70/00, B33Y 70/10, C08L 23/12, C08L 23/16, B29C 64/118, B33Y 80/00

(54) **A POLYMER MATERIAL FOR USE IN A 3D PRINTING PROCESS**
POLYMERMATERIAL ZUR VERWENDUNG IN EINEM 3D-DRUCKVERFAHREN
MATÉRIAU POLYMÈRE DESTINÉ À ÊTRE UTILISÉ DANS UN PROCÉDÉ D'IMPRESSION 3D

(43) Date of publication of application: 25.06.2025
(73) Proprietor: Sika Technology AG, 6340 Baar (CH)
(72) Inventor: FÄH, Christoph, 6010 Kriens (CH); HÜBSCHER, Peter, 6012 Obernau (CH); HUEPPI, Patrick, 6063 Stalden (CH); Z'ROTZ, Roy, 6038 Honau (CH)
(74) Representative: Sika Patent Attorneys

(56) References cited:
- EP-A1- 3 872 126
- EP-A1- 3 974 471
- WO-A1-2022/106429
- WO-A1-2023/062140

## Description

### Technical field

The invention relates to polymer materials that are suitable for manufacturing of three-dimensional articles, particularly plant pots, by means of additive manufacturing technology. The invention also relates to plant pots obtained by using an additive manufacturing process.

### Background art

The demand for tailor made solutions for a broad range of products has significantly grown due to recent developments additive manufacturing technology. 3D printing is especially suitable for providing customized articles since it is possible to change the design for each object, without increasing the manufacturing costs. In the field of construction industry, additive manufacturing techniques have already been used for production of customized elements, such as components of buildings, bridges, decorative wall elements, or even complete houses from cementitious materials. However, elements having thin walls and complex shapes produced by 3D printing of cementitious materials have turned out to have a relatively low resistance against cracking in outdoor applications, especially in cold climate areas. Plastic materials have generally a low thermal expansion coefficient, which makes them inherently more suitable for use in environments with fluctuating temperatures. Plastics are also typically hydrophobic materials, which makes them better suited for outdoor applications than untreated cured cementitious materials.

However, plastic materials also have a lower density than cured cementitious materials. Consequently, 3D printed plastic articles typically have to be adhered to supporting structures to prevent being displaced by wind, especially when installed at exposed areas, such on roof tops of high buildings. Plastic articles can generally be fastened to structures using mechanical, adhesive, and heat-welding means.

The choice of the fastening method depends on type of the materials used in the article and the underlying substrate. In the field of construction, polymeric membranes, are used for waterproofing of flat and low sloped roofs. Commonly used materials for the roofing membranes include plastics, especially thermoplastics such as plasticized polyvinylchloride (p-PVC), thermoplastic polyolefin elastomers (TPO, TPE-O), and elastomers such as ethylene-propylene diene monomer (EPDM) rubber.

In standard roof systems, a roofing membrane forms the outermost exposed layer of the roof and any further elements, such as plant pots, will be installed to be in contact with the top surface of the roofing membrane. Use of mechanical fastening means for adhering additional elements to a roof system is generally not preferred since such installations require creating one or more holes to the roofing membrane, which holes then have to be sealed with appropriate means adding a further step to the installation process. Furthermore, the probability of a leakage in the area of sealed penetrations is always higher than in other areas, where the roofing membrane is still intact.

Depending on the type(s) of polymers used in the plastic article and the roofing membrane, the article may be adhered to the membrane using adhesive bonding means. Polyolefin-based materials having a low surface energy are notoriously difficult to bond with any other adhesives than pressure sensitive adhesives. Chemically crosslinked EPDM- and PVC-based materials are somewhat easier to bond with adhesives, such as with moisture curable polyurethane-based adhesives. However, the use of adhesives in roofing has the disadvantage that adhesively bonded systems are difficult to recycle due to the different chemical basis of the adhesive and substrates. Consequently, the adhesive must be separated from the other materials for the recycling process, which increases the complexity and costs of the recycling process.

Fastening of the plastic articles to roof membranes by heat welding is only possible if the materials are highly compatible with each other. However, commonly used materials for decorative elements, such as plant pots, include ceramics and also plastics, which are suitable for use in 3D printing, such as acrylonitrile butadiene styrene (ABS). However, these materials are not compatible with the materials used in roofing membranes and such decorative articles cannot, therefore, be bonded to roofing membranes by heat welding.

There is thus a need to provide improved solutions, which overcome the aforementioned drawbacks.

Relevant background documents represent WO2022/106429 A1, WO2023/062140 A1, EP3974471 A1 and EP3872126 A1.

### Disclosure of the invention

It is an object of the present invention to provide a polymer material, which can be used for providing customized plant pots using a fast and cost-efficient process. Surprisingly, it has been found out that the object can be achieved by the features of claim 1.

Specifically, according to the invention, a use of a polymer material for the manufacture of a plant pot by an additive manufacturing process is provided, the polymer material comprising:
a) At least one thermoplastic polyolefin elastomer **TPO** having a flexural modulus determined according to ISO 178:2019 standard of not more than 1000 MPa, preferably not more than 750 MPa and
b) At least one inorganic filler **F.**

As it turned out, a polymer material comprising the at least one thermoplastic polyolefin elastomer **TPO** and the at least one inorganic filler **F** is especially suitable for use in manufacture of plant pots by means of additive manufacturing technology, which enables production of customized plant pots with complex shapes using a fast and cost-efficient process. Furthermore, the suggested polymer material is compatible with commonly used polyolefin-based roofing membrane materials, which enables bonding of the produced plant pots to roof substrates by heat welding.

Further aspects of the invention are described below and are subject of the further independent claims. Particularly preferred embodiments are outlined throughout the description and in the dependent claims.

### Detailed description

The subject of the present invention is use of a polymer material for the manufacture of a plant pot by an additive manufacturing process is provided, the polymer material comprising:
a) At least one thermoplastic polyolefin elastomer **TPO** having a flexural modulus determined according to ISO 178:2019 standard of not more than 1000 MPa, preferably not more than 750 MPa and
b) At least one inorganic filler **F.**

The abbreviation 3D is used throughout the present disclosure for the term "three-dimensional.

The term "polymer" refers to a collective of chemically uniform macromolecules produced by a polyreaction (polymerization, polyaddition, polycondensation) of monomers of same of different type where the macromolecules differ with respect to their degree of polymerization, molecular weight and chain length. The term also encompasses derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" designates the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by conventional methods, preferably by gel permeation-chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1,2,4-trichlorobenzene as a solvent, at 160°C.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one thermoplastic polymer TP" refers to the sum of the individual amounts of all thermoplastic polymers TP contained in the composition. Furthermore, in case the composition comprises 20 wt.-% of at least one thermoplastic polymer TP, the sum of the amounts of all thermoplastic polymers TP contained in the composition equals 20 wt.-%.

The term "normal room temperature" designates a temperature of 23 °C.

According to ISO 52900-2015 standard, the term "additive manufacturing (AM)" refers to technologies that use successive layers of material to create a 3D objects. In an AM process, the material is deposited, applied or solidified under computer control based on a digital model of the 3D object to be produced, to create the 3D article. The digital model of the 3D article can be created, for example, by using a CAD software or a 3D object scanner.

Additive manufacturing processes are also referred to using terms such as "generative manufacturing methods" or "3D printing". The term "3D printing" was originally used for an ink jet printing based AM process created by Massachusetts Institute of Technology (MIT) during the 1990s. Compared to conventional technologies, which are based on object creation through either molding/casting or subtracting/machining material from a raw object, additive manufacturing technologies follow a fundamentally different approach for manufacturing. Particularly, it is possible to change the design for each object, without increasing the manufacturing costs, offering tailor made solutions for a broad range of products.

Generally, in an AM process a 3D article is manufactured using a shapeless material (e.g. liquids, powders, granules, pastes, etc.) and/or a shape-neutral material (e.g. bands, wires, filaments) that particularly is subjected to chemical and/or physical processes (e.g. melting, polymerization, sintering, curing or hardening). The main categories of AM technologies include VAT photopolymerization, material extrusion, material jetting, binder jetting, powder bed fusion, direct energy deposition, and sheet lamination techniques.

According to one or more embodiments, the additive manufacturing process is a material extrusion process or a powder bed fusion process.

Suitable material extrusion processes include fused filament fabrication and fused particle fabrication. Suitable powder bed fusion processes include multi jet fusion, selective heat sintering, and selective laser sintering.

In a fused filament fabrication (FFF) process, also known as fused deposition modeling (FDM), a 3D article is produced based on a digital model of the 3D article using a polymer material in form of a filament. A fused particle fabrication (FPF), also known as fused granular fabrication (FGF), differs from a FFF process only in that the polymer material is provided in form of particles, such as granules or pellets, instead of a filament. In a selective laser sintering process, a powdered plastic material is selectively sintered (heated and fused) when exposed to a laser beam.

In a FFF or FPF process, a polymer material is fed into a moving printer extrusion head, heated past its glass transition or melting temperature, and then deposited through a heated nozzle of the printer extrusion head as series of layers in a continuous manner. After the deposition, the layer of polymer material solidifies and fuses with the already deposited layers.

The printer extrusion head is moved under computer control to define the printed shape based on control data calculated from the digital model of the 3D article. Usually the printer extrusion head moves in two dimensions to deposit one horizontal plane, or layer, at a time. The formed object and/or the printer extrusion head is then moved vertically by a small amount to start deposition of a new layer.

Typically, the digital model of the 3D article is first converted to a STL file to tessellate the 3D shape and slice it into digital layers. The STL file is then transferred to the 3D printer using custom machine software. A control system, such as a computer-aided manufacturing (CAM) software package, is used to transform the STL file into control data, which is used for controlling the printing process.

According to one or more embodiments, the additive manufacturing process is a fused filament fabrication, a fused particle fabrication, or a selective laser sintering process, preferably a fused filament fabrication process or a fused particle fabrication process.

The polymer material used in the additive manufacturing process comprises as a first essential component at least one thermoplastic polyolefin elastomer **TPO.**

The term "thermoplastic elastomer (TPE)" refers here to a class of polymers that have both thermoplastic and elastomeric properties. Below its melting temperature, a TPE has an elastic behavior like a thermoset rubber. Thermoplastic elastomers have physical crosslinking points, which dissolve on heating without decomposing the macromolecules. Consequently, these materials can be melted by heating above the melting temperature and processed using conventional plastic techniques, such as injection molding and extrusion.

TPEs are typically classified into two groups as copolymers or thermoplastic/elastomer blends. The term "thermoplastic polyolefin elastomer (TPO, TPE-O)" designates in the present disclosure specific type of thermoplastic elastomers (TPE), which are provided as physical or reactor blends composed of olefinic constituents.

TPOs are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Commercially available TPOs include reactor blends of the base polyolefin and the polyolefin modifier, also known as "in-situ TPOs" or "reactor TPOs or "impact copolymers (ICP)", as well as physical blends of the aforementioned components. In case of a reactor-blend type of TPO, the components are typically produced in a sequential polymerization process, wherein the components of the matrix phase are produced in a first reactor and transferred to a second reactor, where the components of the dispersed phase are produced and incorporated as domains in the matrix phase. A physical-blend type of TPO is produced by melt-mixing the base polyolefin with the polyolefin modifier each of which was separately formed prior to blending of the components. TPOs produced by mett-mixing and simultaneous (dynamic) vulcanization of the thermoplastic-rubber blends are commonly known as thermoplastic vulcanizates (TPV).

Reactor-blend type TPOs comprising polypropylene homopolymer as the base polymer are often referred to as "heterophasic propylene copolymers (HECO)" whereas reactor-blend type TPOs comprising propylene random copolymer as the base polymer are often referred to as "heterophasic propylene random copolymers (RAHECO)". The term "heterophasic propylene copolymer" encompasses in the present disclosure both the HECO and RAHECO types of heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of TPOs is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152:2005 standard as well as higher flexural modulus determined according to ISO 178:2019 standard compared to reactor-TPOs and soft-TPOs.

According to the present invention, the at least one thermoplastic polyolefin elastomer **TPO** used in the polymer material has a flexural modulus determined according to ISO 178:2019 standard of not more than 1000 MPa, preferably not more than 750 MPa, more preferably not more than 650 MPa, even more preferably not more than 550 MPa, still more preferably not more than 500 MPa.

In one or more embodiments, the at least one thermoplastic polyolefin elastomer **TPO** has a flexural modulus determined according to ISO 178:2019 standard of not more than 450 MPa, preferably not more than 350 MPa, more preferably not more than 250 MPa, even more preferably not more than 150 MPa, still more preferably not more than 100 MPa.

In one or more embodiments, the at least one thermoplastic polyolefin elastomer **TPO** has:
- a xylene cold soluble fraction determined according to ISO 16152:2005 standard of not more than 85 wt.-%, preferably not more than 80 wt.-%, more preferably not more than 75 wt.-%, even more preferably not more than 70 wt.-% and/or
- a melting temperature determined by DSC according to ISO 11357-3:2018 standard using a heating rate of 2°C/min of at least 105 °C, preferably at least 115 °C, more preferably at least 125 °C, even more preferably at least 130 °C.

In one or more preferred embodiments, the at least one thermoplastic polyolefin elastomer **TPO** has:
- a xylene cold soluble fraction determined according to ISO 16152:2005 standard of 25 - 85 wt.-%, preferably 35 - 80 wt.-%, more preferably 45 - 75 wt.-%, even more preferably 55 - 70 wt.-% and/or
- a melting temperature determined by DSC according to ISO 11357-3:2018 standard using a heating rate of 2°C/min of 105 - 185 °C, preferably 115 - 175 °C, more preferably 125 - 165 °C, even more preferably 130 - 160 °C.

It may furthermore be preferred that the at least one thermoplastic polyolefin elastomer **TPO** has a melt flow rate (230 °C/2.16 kg) determined according to ISO 1133-1 standard of not more than 75 g/10 min, preferably not more than 50 g/10 min, more preferably not more than 35 g/10 min, even more preferably not more than 25 g/10.

Preferably, the at least one thermoplastic polyolefin elastomer **TPO** is present in the polymer material in an amount of at least 5 wt.-%, more preferably at least 15 wt.-%, even more preferably at least 25 wt.-%.

In one or more embodiments, the polymer material comprises 25 - 85 wt.-%, preferably 35 - 75 wt.-%, more preferably 40 - 70 wt.-%, even more preferably 45 - 65 wt.-%, of the at least one thermoplastic polyolefin elastomer **TPO**.

According to one or more further embodiments, the at least one thermoplastic polyolefin elastomer **TPO** is a heterophasic propylene copolymer.

Suitable heterophasic propylene copolymers are commercially available, for example, under the trade names of Adflex^{®}, Adsyl^{®}, Clyrell^{®}, Hifax^{®}, Hiflex^{®}, and Softell^{®} (all from LyondellBasell) and under the trade name of of Borsoft^{®} (from Borealis Polymers), such as Borsoft^{®} SD233 CF.

In one or more embodiments, the at least one thermoplastic polyolefin elastomer **TPO** is a heterophasic propylene copolymer comprising:
- A) at least one polypropylene having a melting temperature (Tₘ) determined by differential scanning calorimetry (DSC) according to ISO 11357-3 standard using a heating rate of 2 °C/min of 100 °C or more, preferably a propylene homopolymer and/or a random copolymer of propylene having a comonomer content of less than 20 wt.-%, preferably less than 10 wt.-%, based on the weight of the copolymer, and
- B) at least one polyolefin having a glass transition temperature (T_{g}) determined by dynamical mechanical analysis (DMA) as the peak of the measured loss modulus (G") curve using an applied frequency of 1 Hz and a strain level of 0.1 % of -20 °C or less, preferably -25 °C or less, more preferably -35 °C or less, preferably an ethylene copolymer or a ethylene random copolymer having a comonomer content of at least 5 wt.-%, preferably at least 10 wt.-%, based on the weight of the copolymer, preferably an ethylene-propylene rubber (EPR),
wherein the heterophasic propylene copolymer comprises a matrix phase composed primarily of A) and a dispersed phase composed primarily of B).

The polymer material may further comprise other types of polymers in addition to the at least one thermoplastic polyolefin elastomer **TPO**.

In one or more embodiments, the polymer material further comprises at least one propylene copolymer **PCP** different from the at least one thermoplastic polyolefin elastomer **TPO**.

Especially suitable compounds for use as the propylene copolymer **PCP** include propylene copolymers having a propylene content of at least 60 wt.-%, preferably at least 70 wt.-%, based on the weight of the propylene copolymer.

In one or more embodiments, the at least one propylene copolymer **PCP** is a propylene-ethylene copolymer, preferably a random propylene-ethylene copolymer, preferably having an ethylene content of 5 - 20 wt.-%, more preferably 9 - 18 wt.-%, based on the weight of the propylene copolymer **PCP**.

In one or more embodiments, the at least one propylene copolymer **PCP** has:
- a flexural modulus at 23°C determined according to ISO 178:2019 standard of not more than 100 MPa, preferably not more than 75 MPa and/or
- a xylene cold soluble content determined according to ISO 16152:2005 standard of at least 90 wt.-%, more preferably at least 95 wt.-% and/or
- a Vicat softening temperature determined according to ISO 306:2022 standard of not more than 85 °C, preferably not more than 75 °C and/or
- a melt flow rate (230°C/2.16 kg) determined according to ISO 1133 standard of not more than 50 g/10 min, preferably not more than 35 g/10 min and/or
- a density at 23°C determined according to ASTM D-792 standard of 0.850 - 0.900 g/cm³, preferably 0.855 - 0.890 g/cm³.

Particularly suitable propylene copolymers **PCP** are commercially available under the trade name of Versify^{®} (from Dow Chemicals) and under the trade name of Vistamaxx^{®} (from Exxon Mobil), for example Vistamaxx^{®} 6102 and 6102. These types of propylene copolymers are also known as "propylene-based elastomers" due to their especially high a xylene cold soluble content.

The polymer material further comprises as a second compulsory component at least one inorganic filler **F.**

Preferably, the at least one inorganic filler **F** has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate. The measurement for water-solubility of a compound in water can be conducted using the standard "shake flask" method as defined in the OECD test guideline 105 (adopted 27^{th} July, 1995).

In one or more embodiments, the polymer material comprises at least 0.5 wt.-%, preferably at least 2.5 wt.-%, more preferably at least 5 wt.-%, even more preferably at least 10 wt.-%, of the at least one inorganic filler **F.**

In one or more embodiments, the polymer material comprises 2.5 - 65 wt.-%, preferably 5 - 60 wt.-%, more preferably 10 - 55 wt.-%, even more preferably 15 - 50 wt.-%, of the at least one inorganic filler **F.**

In one or more embodiments, the at least one inorganic filler **F** is present in the polymer material as finely divided particles, preferably having a median particle size d₅₀ of not more than 150 µm, more preferably not more than 100 µm, even more preferably not more than 50 µm, still more preferably not more than 35 µm.

The term "particle size" refers in the present disclosure to the area-equivalent spherical diameter of a particle (Xₐᵣₑₐ). The term "median particle size d₅₀" refers in the present disclosure to a particle size below which 50 % of all particles by volume are smaller than the d₅₀ value. The particle size distribution can be determined, for example, by sieve analysis according to the method as described in ASTM C136/C136M -2014 standard ("Standard Test Method for Sieve Analysis of Fine and Coarse Aggregates).

In one or more embodiments, the at least one filler **F** has a median particle size d₅₀ in the range of 0.5 - 50 µm, preferably 1 - 35 µm, more preferably 1.5 - 15 µm, even more preferably 2.5 - 10 µm.

Suitable compounds for use as the inorganic filler **F** include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

In one or more embodiments, the at least one inorganic filler **F** is selected from calcium carbonate, magnesium carbonate, clay, expanded clay, diatomaceous earth, pumice, mica, kaolin, talc, dolomite, xonotlite, perlite, vermiculite, Wollastonite, barite, calcium hydroxide, calcium aluminates, silica, fumed silica, and fused silica.

In one or more embodiments, the polymer material comprises at least one inorganic fiber **IF,** preferably selected from milled glass fibers, aramid fibers, wollastonite fibers, and carbon fibers.

Especially suitable inorganic fibers for use in the polymer material have an average fiber length in the range of 100 - 350 µm, particularly 150 - 250 µm and/or an average fiber diameter in the range of 5 - 35 µm, particularly 10 - 25 µm.

The term "average fiber length/diameter" refers to the arithmetic average of the individual lengths/diameters of the fibers within a sample or collection or a statistically significant and representative random sample drawn from such a sample or collection. The term "fiber diameter" refers in the present disclosure to the equivalent diameter of the fiber determined according to EN 14889-2:2006 standard.

The fiber length and diameter may be determined by using dynamic image analysis method conducted according to ISO 13322-2:2006 standard, for example, with a dry dispersion method, where the particles are dispersed in air, preferably by using air pressure dispersion method. The measurements can be conducted using any type of dynamic image analysis apparatus, such as a Camsizer XT device (trademark of Retsch Technology GmbH).

In one or more embodiments, the polymer material further comprises at least one flame retardant **FR.**

The at least one flame retardant **FR** is preferably selected from the group consisting of magnesium hydroxide, aluminum trihydroxide, antimony trioxide, ammonium polyphosphate, and melamine-, melamine resin-, melamine derivative-, melamine-formaldehyde-, silane-, siloxane-, and polystyrene-coated ammonium polyphosphates.

Further suitable flame retardants for use as the at least one flame retardant **FR** include, for example, 1,3,5-triazine compounds, such as melamine, melam, melem, melon, ammeline, ammelide, 2-ureidomelamine, acetoguanamine, benzoguanamine, diaminophenyltriazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethylisocyanaurate, 1,3,5-triglycidylisocyanaurate, triallylisocyanurate and derivatives of the aforementioned compounds.

Suitable flame retardants are commercially available, for example, under the trade names of Martinal^{®} and Magnifin^{®} (both from Albemarle) and under the trade names of Exolit^{®} (from Clariant), Phos-Check^{®} (from Phos-Check) and FR CROS^{®} (from Budenheim).

In one or more preferred embodiments, the at least one flame retardant is selected from magnesium hydroxide and aluminum trihydroxide.

In one or more embodiments, the polymer material comprises 0.5 - 50 wt.-%, preferably 2.5 - 40 wt.-%, more preferably 5 - 35 wt.-%, even more preferably 10 - 30 wt.-%, of the at least one flame retardant **FR.**

In one or more embodiments, the polymer material further comprises at least one color pigment **CP,** preferably having a median particle size d₅₀ in the range of 50 - 1000 nm, more preferably 75 - 750 nm, even more preferably 100 - 650 nm, still more preferably 125 - 500 nm.

The at least one color pigment **CP** is preferably selected from the group consisting of titanium dioxide, zinc oxide, zinc sulfide, barium sulphate, iron oxide, mixed metal iron oxide, aluminium powder, and graphite.

In a first preferred embodiment, the polymer material comprises:
a) 25 - 85 wt.-%, preferably 35 - 75 wt.-%, more preferably 40 - 70 wt.-%, even more preferably 45 - 65 wt.-% of the at least one thermoplastic polyolefin elastomer **TPO,**
b) 2.5 - 60 wt.-%, preferably 5 - 55 wt.-%, more preferably 10 - 50 wt.-%, even more preferably 15 - 45 wt.-% of the at least one inorganic filler **F,**
c) Optionally 0.5 - 45 wt.-%, preferably 1.5 - 40 wt.-%, more preferably 2.5 - 35 wt.-%, even more preferably 5 - 30 wt.-% of the at least one flame retardant **FR,** and
d) Optionally 0.1 - 10 wt.-%, preferably 0.5 - 7.5 wt.-%, more preferably 1 - 7.5 wt.-%, even more preferably 1.5 - 5 wt.-% of the at least one color pigment **CP,** all proportions being based on the total weight of the polymer material.

In a second preferred embodiment, the polymer material comprises:
a) 25 - 85 wt.-%, preferably 35 - 75 wt.-%, more preferably 40 - 70 wt.-%, even more preferably 45 - 65 wt.-% of the at least one thermoplastic polyolefin elastomer **TPO,**
b) 2.5 - 60 wt.-%, preferably 5 - 55 wt.-%, more preferably 10 - 50 wt.-%, even more preferably 15 - 45 wt.-% of the at least one inorganic filler **F,** and
c) 0.5 - 45 wt.-%, preferably 1.5 - 40 wt.-%, more preferably 2.5 - 35 wt.-%, even more preferably 5 - 30 wt.-% of the at least one flame retardant **FR,** all proportions being based on the total weight of the polymer material.
d) Optionally 0.1 - 10 wt.-%, preferably 0.5 - 7.5 wt.-%, more preferably 1 - 7.5 wt.-%, even more preferably 1.5 - 5 wt.-% of the at least one color pigment **CP,** all proportions being based on the total weight of the polymer material.

In a third preferred embodiment, the polymer material comprises:
a) 25 - 85 wt.-%, preferably 35 - 75 wt.-%, more preferably 40 - 70 wt.-%, even more preferably 45 - 65 wt.-% of the at least one thermoplastic polyolefin elastomer **TPO,**
b) 2.5 - 60 wt.-%, preferably 5 - 55 wt.-%, more preferably 10 - 50 wt.-%, even more preferably 15 - 45 wt.-% of the at least one inorganic filler **F,** and
c) Optionally 0.5 - 45 wt.-%, preferably 1.5 - 40 wt.-%, more preferably 2.5 - 35 wt.-%, even more preferably 5 - 30 wt.-% of the at least one flame retardant **FR,** all proportions being based on the total weight of the polymer material.
d) 0.1 - 10 wt.-%, preferably 0.5 - 7.5 wt.-%, more preferably 1 - 7.5 wt.-%, even more preferably 1.5 - 5 wt.-% of the at least one color pigment **CP,** all proportions being based on the total weight of the polymer material.

In one or more embodiments, the polymer material has an elastic modulus determined according to ISO 527-1:2019 standard of not more than 300 MPa, preferably not more than 200 MPa and/or a Shore D hardness determined according to ISO 48:2018 standard of not more than 75, preferably not more than 50.

Polymer materials having the elastic modulus and/or Shore D hardness in the above cited ranges have been found out as especially suitable for 3D printing of plant pots.

The polymer material may further comprise one or more UV-stabilizers, preferably at least one hindered amine light stabilizer (HALS). These types of compounds are typically added to polymer materials to prevent light-induced polymer degradation. Such UV-stabilizers are needed especially in case the three-dimensional article is used in outdoor applications, for example, for waterproofing of roof structures.

Suitable hindered amine light stabilizers (HALS) include, for example, bis (2,2,6,6-tetramethylpiperidyl)-sebacate; bis-5(1,2,2,6,6-pentamethylpiperidyl)-sebacate; n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylenediamine and 4-tert-octylamino-2,6-dichloro-1,3,5-s-triazine; tris-(2,2,6,6-tetramethylpiperidyl)-nitrilotriacetate; tetrakis-(2,2,6,6-tetramethyl-4-piperidyl)-1,2,3,4-butane-tetra-arbonic acid; and 1,1'(1,2-ethanediyl)-bis-(3,3,5,5-tetramethylpiperazinone).

Suitable hindered amine light stabilizers are commercially available, for example, under the trade name of Tinuvin^{®} (from Ciba Specialty Chemicals), such as Tinuvin^{®} 371, Tinuvin^{®} 622, and Tinuvin^{®} 770; under the trade name of Chimassorb^{®} (from Ciba Specialty Chemicals) , such as Chimassorb^{®} 119, Chimassorb^{®} 944, Chimassorb^{®} 2020; and under the trade name of Cyasorb^{®} (from Cytec Industries), such as Cyasorb^{®} UV 3346, Cyasorb^{®} UV 3529, Cyasorb^{®} UV 4801, and Cyasorb^{®} UV 4802; and under the trade name of Hostavin^{®} (from Clariant), such as Hostavin N30.

The polymer material may comprise various further additives, such as thermal stabilizers, antioxidants, plasticizers, dyes, matting agents, antistatic agents, impact modifiers, biocides, and processing aids such as lubricants, slip agents, antiblock agents, and denest aids. The total amount of these types of further additives is preferably not more than 10 wt.-%, more preferably not more than 5 wt.-%, based on the total weight of the polymer material.

Another aspect of the present invention is a method for producing a plant pot by an additive manufacturing process, the method comprising the following steps:
i) Providing a digital model of the plant pot,
ii) Based on the digital model, printing the polymer material as defined in any one of previous claims using a 3D printer to form the plant pot.

The 3D printer is preferably a fused filament fabrication, fused particle fabrication, or a selective laser sintering printer, preferably a fused filament fabrication or a fused particle fabrication printer.

A "digital model" refers to a digital representation of a real world object, for example of the plan pot, that exactly replicates the shape of the object. Typically, the digital model is stored in a computer readable data storage, especially in a data file. The data file format can, for example, be a computer-aided design (CAD) file format or a G-code (also called RS-274) file format.

According to one or more embodiments, step ii) comprises steps of:
ii1) Feeding the polymer material into the 3D printer,
ii2) Heating the polymer material to provide a melted polymer material, and
ii3) Depositing the melted polymer material by using a printer extrusion head of the 3D printer in a selected pattern in accordance with the digital model of the 3D article to form the plant pot.

In step ii2), the polymer material is preferably heated to a temperature, which is above the melting temperature of the at least one thermoplastic polyolefin elastomer **TPO** to obtain the melted polymer material. In case the polymer material comprises multiple thermoplastic polyolefin elastomers, the polymer material is preferably heated to a temperature, which is above the melting temperature of the thermoplastic polyolefin elastomer **TPO** having the highest melting temperature.

The movements of the printer extrusion head in step ii3) are controlled according to control data calculated from the digital model of the 3D article. The digital model of the 3D article is preferably first converted to a STL file to tessellate the 3D shape of the article and to slice it into digital layers. The STL file is transferred to the 3D printer using custom machine software. A control system, such as a computer-aided manufacturing (CAM) software package, is used to generate the control data based on the STL file. The control system can be part of the 3D printer, or it can be part of a separate data processing unit, for example a computer system.

Plan pots obtained by using the method of the present invention have the advantage that they are compatible with usual covering materials for roofs, particularly roofing membranes. Such plant pots can be easily welded with roofing membranes in order to achieve a sufficient peel strength between the plant pot and the membrane.

The digital model of the plant pot can, for example, be obtained by 3D scanning of an existing plant pot. 3D scanning is a process of analyzing a real-world object, for example a roof element, to collect data on its shape. The collected data can then be used to construct the digital model of the object. Thereby, a control system can be used to generate the digital model out of the collected data. The control system can be part of the 3D scanner or it can be part of a separate data processing unit, for example a computer system.

However, it is also possible to obtain the digital model by measuring all of the lengths and angles of the existing plant pot by hand and generating the digital model manually using a modelling software. Nevertheless, this is time consuming and more error-prone than 3D scanning. The digital model of the plant pot can also be directly created, for example, by using a CAD software.

There are many different 3D scanners available on the market, which can be used for 3D scanning. Preferably, the scanning of the roof element is performed with a handheld and/or portable 3D scanner. Handheld and/or portable 3D scanners do not need a complicated installation and allow for a quick and easy scanning of the roof element to be sealed.

Especially, the 3D scanner is a non-contact 3D scanner. Such kind of scanners emit some kind of radiation, e.g. light, ultrasound or x-rays, and detect its reflection or radiation passing through the object to be scanned in order to probe the object.

A further aspect of the invention is a plant pot composed of the polymer material as discussed above.

Plant pots composed of the polymer material of the present invention have the advantage that they are compatible with usual sealing materials for roofs, such as roofing membranes. Therefore, the plant pots of the present invention can be adhered to roofing membranes without using mechanical or adhesive bonding means resulting in the advantages as discussed above.

A still further aspect of the present invention is a method for applying a plant pot on a roof substrate, the method comprising steps of:
I) Providing a plant pot obtained by using the method according to claim 18 and
II) Bonding a bottom surface of the plant pot to a surface of the roof substrate by using adhesive bonding or heat welding means, preferably by heat welding means.

In one or more embodiments, the roof substrate is a roofing membrane.

## Claims

1. Use of a polymer material for the manufacture of a plant pot by an additive manufacturing process, the polymer material comprising:
a) At least one thermoplastic polyolefin elastomer **TPO** having a flexural modulus determined according to ISO 178:2019 standard of not more than 1000 MPa, preferably not more than 750 MPa and
b) At least one inorganic filler F.

2. Use according to claim 1, wherein the additive manufacturing process is a fused filament fabrication process of a fused particle fabrication process.

3. Use according to claim 1 or 2, wherein the at least one thermoplastic polyolefin elastomer **TPO** has a xylene cold soluble fraction determined according to ISO 16152:2005 standard of not more than 85 wt.-%, preferably not more than 75 wt.-% and/or a melting temperature determined by DSC according to ISO 11357-3:2018 standard using a heating rate of 2°C/min of at least 105 °C, preferably at least 115 °C.

4. Use according to any one of previous claims, wherein the polymer material comprises 25 - 85 wt.-%, preferably 35 - 75 wt.-%, of the at least one thermoplastic polyolefin elastomer **TPO.**

5. Use according to any one of previous claims, wherein the at least one thermoplastic polyolefin elastomer **TPO** is a heterophasic propylene copolymer.

6. Use according to any one any one of previous claims, wherein the polymer material further comprises at least one propylene copolymer **PCP** different from the at least one thermoplastic polyolefin elastomer **TPO.**

7. Use according to claim 6, wherein the at least one propylene copolymer **PCP** is a propylene-ethylene copolymer, preferably a random propylene-ethylene copolymer, preferably having an ethylene content of 5 - 20 wt.-%, more preferably 9 - 18 wt.-%, based on the weight of the propylene copolymer **PCP**.

8. Use according to any one of previous claims, wherein the polymer material comprises at least 0.5 wt.-%, preferably at least 2.5 wt.-%, of the at least one inorganic filler **F.**

9. Use according to any one of previous claims, wherein the polymer material further comprises at least one flame retardant **FR.**

10. Use according to claim 9, wherein the at least one flame retardant **FR** is selected from magnesium hydroxide, aluminum trihydroxide, antimony trioxide, ammonium polyphosphate, and melamine-, melamine resin-, melamine derivative-, melamine-formaldehyde-, silane-, siloxane-, and polystyrene-coated ammonium polyphosphates, preferably from magnesium hydroxide and aluminum trihydroxide.

11. Use according to any one of previous claims, wherein the polymer material has an elastic modulus determined according to ISO 527-1:2019 standard of not more than 200 MPa and/or a shore D hardness determined according to ISO 48:2018 standard of not more than 75.

12. Method for producing a plant pot by an additive manufacturing process, the method comprising the following steps:
i) Providing a digital model of the plant pot,
ii) Based on the digital model, printing the polymer material as defined in any one of previous claims using a 3D printer to form the plant pot.

13. Method according to claim 12, wherein the 3D printer is a fused filament fabrication or a fused particle fabrication printer.

14. A plant pot composed of the polymer material as defined in any one of claims 1-11.

15. A method for applying a plant pot on a roof substrate, preferably a roofing membrane, the method comprising steps of:
I) Providing a plant pot obtained by using the method according to claim 12 or 13 and
II) Bonding a bottom surface of the plant pot to a surface of the roof substrate by using adhesive bonding or heat welding means, preferably heat welding means.

## Patentansprüche

1. Verwendung eines Polymermaterials zur Fertigung eines Blumentopfs durch einen additiven Fertigungsprozess, wobei das Polymermaterial Folgendes umfasst:
a) mindestens ein thermoplastisches Polyolefin-Elastomer **TPO** mit einem gemäß ISO-Norm 178:2019 bestimmten Biegemodul von nicht mehr als 1000 MPa, vorzugsweise nicht mehr als 750 MPa, und
b) mindestens einen anorganischen Füllstoff **F.**

2. Verwendung nach Anspruch 1, wobei es sich bei dem additiven Fertigungsverfahren um ein Fused-Filament-Fabrication-Verfahren oder ein Fused-Particle-Fabrication-Verfahren handelt.

3. Verwendung nach Anspruch 1 oder 2, wobei das mindestens eine thermoplastische Polyolefin-Elastomer **TPO** einen gemäß ISO-Norm 16152:2005 bestimmten in kaltem Xylol löslichen Anteil von nicht mehr als 85 Gew.-%, vorzugsweise nicht mehr als 75 Gew.-%, und/oder eine durch DSC gemäß ISO-Norm 11357-3:2018 unter Verwendung einer Aufheizrate von 2 °C/min bestimmte Schmelztemperatur von mindestens 105 °C, vorzugsweise mindestens 115 °C, aufweist.

4. Verwendung nach einem der vorhergehenden Ansprüche, wobei das Polymermaterial 25-85 Gew.-%, vorzugsweise 35-75 Gew.-%, des mindestens einen thermoplastischen Polyolefin-Elastomers **TPO** umfasst.

5. Verwendung nach einem der vorhergehenden Ansprüche, wobei es sich bei dem mindestens einen thermoplastischen Polyolefin-Elastomer **TPO** um ein heterophasiges Propylen-Copolymer handelt.

6. Verwendung nach einem der vorhergehenden Ansprüche, wobei das Polymermaterial ferner mindestens ein Propylen-Copolymer **PCP** umfasst, das von dem mindestens einen thermoplastischen Polyolefin-Elastomer **TPO** verschieden ist.

7. Verwendung nach Anspruch 6, wobei es sich bei dem mindestens einen Propylen-Copolymer **PCP** um ein Propylen-Ethylen-Copolymer, vorzugsweise ein statistisches Propylen-Ethylen-Copolymer, bevorzugt mit einem Ethylengehalt von 5-20 Gew.-%, bevorzugter 9-18 Gew.-%, bezogen auf das Gewicht des Propylen-Copolymers **PCP,** handelt.

8. Verwendung nach einem der vorhergehenden Ansprüche, wobei das Polymermaterial mindestens 0,5 Gew.-%, vorzugsweise mindestens 2,5 Gew.-%, des mindestens einen anorganischen Füllstoffs **F** umfasst.

9. Verwendung nach einem der vorhergehenden Ansprüche, wobei das Polymermaterial ferner mindestens ein Flammschutzmittel **FR** umfasst.

10. Verwendung nach Anspruch 9, wobei das mindestens eine Flammschutzmittel **FR** aus Magnesiumhydroxid, Aluminiumtrihydroxid, Antimontrioxid, Ammoniumpolyphosphat und mit Melamin, Melaminharz, Melaminderivat, Melaminformaldehyd, Silan, Siloxan und Polystyrol beschichteten Ammoniumpolyphosphaten, vorzugsweise aus Magnesiumhydroxid und Aluminiumtrihydroxid ausgewählt ist.

11. Verwendung nach einem der vorhergehenden Ansprüche, wobei das Polymermaterial einen gemäß ISO-Norm 527-1:2019 bestimmten Elastizitätsmodul von nicht mehr als 200 MPa und/oder eine gemäß ISO-Norm 48:2018 bestimmte Shore-D-Härte von nicht mehr als 75 aufweist.

12. Verfahren zur Herstellung eines Blumentopfs durch einen additiven Fertigungsprozess, wobei das Verfahren die folgenden Schritte umfasst:
i) Bereitstellen eines digitalen Modells des Blumentopfs,
ii) auf der Basis des digitalen Modells Verdrucken des Polymermaterials gemäß einem der vorhergehenden Ansprüche unter Verwendung eines 3D-Druckers zur Bildung des Blumentopfs.

13. Verfahren nach Anspruch 12, wobei es sich bei dem 3D-Drucker um einen Fused-Filament-Fabrication- oder Fused-Particle-Fabrication-Drucker handelt.

14. Blumentopf, zusammengesetzt aus dem Polymermaterial gemäß einem der Ansprüche 1-11.

15. Verfahren zum Aufbringen eines Blumentopfs auf ein Dachsubstrat, vorzugsweise eine Dachmembran, wobei das Verfahren die folgenden Schritte umfasst:
I) Bereitstellen eines unter Verwendung des Verfahrens nach Anspruch 12 oder 13 erhaltenen Blumentopfs und
II) Verbinden einer Bodenfläche des Blumentopfs mit einer Oberfläche des Dachsubstrats mittels Verkleben oder Heißverschweißen, vorzugsweise Heißverschweißen.

## Revendications

1. Utilisation d'un matériau polymère pour la fabrication d'un pot de plante par un procédé de fabrication additive, le matériau polymère comprenant :
a) au moins un élastomère de polyoléfine thermoplastique TPO présentant un module de flexion déterminé selon la norme ISO 178:2019 d'au plus 1 000 MPa, de préférence d'au plus 750 MPa et
b) au moins une charge inorganique F.

2. Utilisation selon la revendication 1, dans laquelle le procédé de fabrication additive est un procédé de fabrication de filaments fondus d'un procédé de fabrication de particules fondues.

3. Utilisation selon la revendication 1 ou 2, dans laquelle l'au moins un élastomère de polyoléfine thermoplastique TPO a une fraction soluble à froid dans le xylène déterminée selon la norme ISO 16152:2005 d'au plus 85 % en poids, de préférence d'au plus 75 % en poids et/ou une température de fusion déterminée par DSC selon la norme ISO 11357-3:2018 en utilisant une vitesse de chauffage de 2 °C/min d'au moins 105 °C, de préférence d'au moins 115 °C.

4. Utilisation selon l'une quelconque des revendications précédentes, dans laquelle le matériau polymère comprend 25 à 85 % en poids, préférablement 35 à 75 % en poids, de l'au moins une élastomère de polyoléfine thermoplastique TPO.

5. Utilisation selon l'une quelconque des revendications précédentes, dans laquelle l'au moins un élastomère de polyoléfine thermoplastique TPO est un copolymère de propylène hétérophasique.

6. Utilisation selon l'une quelconque des revendications précédentes, dans laquelle le matériau polymère comprend en outre au moins un copolymère de propylène PCP différent de l'au moins un élastomère de polyoléfine thermoplastique TPO.

7. Utilisation selon la revendication 6, dans laquelle l'au moins un copolymère de propylène PCP est un copolymère de propylène-éthylène, de préférence un copolymère statistique de propylène-éthylène, ayant de préférence une teneur en éthylène de 5 à 20 % en poids, plus préférablement de 9 à 18 % en poids, sur la base du poids du copolymère de propylène PCP.

8. Utilisation selon l'une quelconque des revendications précédentes, dans laquelle le matériau polymère comprend au moins 0,5 % en poids, de préférence au moins 2,5 % en poids de l'au moins une charge inorganique F.

9. Utilisation selon l'une quelconque des revendications précédentes, dans laquelle le matériau polymère comprend en outre au moins un agent ignifugeant FR.

10. Utilisation selon la revendication 9, dans laquelle l'au moins un agent ignifugeant FR est choisi parmi hydroxyde de magnésium, trihydroxyde d'aluminium, trioxyde d'antimoine, polyphosphate d'ammonium et polyphosphates d'ammonium revêtus de mélamine, de résine de mélamine, de dérivé de mélamine, de mélamine-formaldéhyde, de silane, de siloxane et de polystyrène, de préférence parmi hydroxyde de magnésium et trihydroxyde d'aluminium.

11. Utilisation selon l'une quelconque des revendications précédentes, dans laquelle le matériau polymère a un module d'élasticité déterminé selon la norme ISO 527-1:2019 non supérieur à 200 MPa et/ou une dureté Shore D déterminée selon la norme ISO 48:2018 non supérieure à 75.

12. Procédé de fabrication d'un pot de plante par un procédé de fabrication additive, le procédé comprenant les étapes suivantes :
i) mise à disposition d'un modèle numérique du pot à plante,
ii) sur la base du modèle numérique, impression du matériau polymère tel que défini dans l'une quelconque des revendications précédentes en utilisant une imprimante 3D pour former le pot de plante.

13. Procédé selon la revendication 12, dans lequel l'imprimante 3D est une imprimante de fabrication par filament fondu ou de fabrication par particules fondues.

14. Pot de plante composé du matériau polymère tel que défini dans l'une quelconque des revendications 1 à 11.

15. Procédé d'application d'un pot de plante sur un substrat de toit, de préférence une membrane de toiture, le procédé comprenant les étapes de :
I) fourniture d'un pot de plante obtenu en utilisant le procédé selon la revendication 12 ou 13 et
II) liaison d'une surface inférieure du pot de plante à une surface du substrat de toit en utilisant des moyens de liaison adhésive ou de soudage à chaud, de préférence des moyens de soudage à chaud.
